# EUROPÄISCHE PATENTSCHRIFT

(11) **EP 3 573 141 B1**
(45) Veröffentlichungstag und Bekanntmachung des Hinweises auf die Patenterteilung: **22.12.2021**
(21) Anmeldenummer: 19176015.6
(22) Anmeldetag: 22.05.2019
(51) Int. Cl.: H01M 4/04, H01M 4/13, H01M 4/139, H01M 4/36, H01M 4/66, H01M 4/74

(54) **LITHIUMANODE UND VERFAHREN ZU DEREN HERSTELLUNG**
LITHIUM ANODE AND METHOD FOR ITS MANUFACTURE
ANODE AU LITHIUM ET SON PROCÉDÉ DE FABRICATION

(30) Priorität: 25.05.2018 DE 102018112637
(43) Veröffentlichungstag der Anmeldung: 27.11.2019
(73) Patentinhaber: Volkswagen Aktiengesellschaft, 38440 Wolfsburg (DE)
(72) Erfinder: WEBER, Dominik, 38114 Braunschweig (DE); LEMKE, Andreas, 39365 Ummendorf (DE); SCHILDE, Sylke, 38533 Vordorf (DE); ZIPPRICH, Wolfgang, 38550 Isenbüttel (DE)
(74) Vertreter: MFG Patentanwälte Meyer-Wildhagen Meggle-Freund Gerhard PartG mbB

(56) Entgegenhaltungen:
- DE-A1-102013 200 749
- DE-A1-102013 201 853
- US-B1- 7 736 802

## Beschreibung

Die Erfindung betrifft eine Lithiumanode für eine Lithiumzelle und/oder eine Lithiumbatterie mit einer Stromableiterschicht, einem Anodenaktivmaterial und einer Beschichtung.

Die Erfindung betrifft weiter ein Verfahren zu deren Herstellung. Weiter betrifft die Erfindung eine Lithiumbatterie mit einer solchen Lithiumanode.

Sogenannte Lithiumbatterien oder auch Lithium-Ionen-Batterien sind vielfältig für portable Anwendungen und für elektrische Antriebe in Kraftfahrzeugen im Einsatz. Der Begriff Lithiumbatterie umfasst in diesem Zusammenhang sowohl Batterien mit Anoden aus Lithiummetall als auch solche mit Anoden aus lithiiertem Graphit.

Im Zusammenhang mit der vorliegenden Anmeldung geht es um die Technologie wiederaufladbarer Lithiumionen-Akkumulatoren, im Unterschied zu den nicht wiederverwendbaren Primärbatterien. Der Begriff Lithiumbatterie soll hier jedoch auch solche Akkumulatoren bezeichnen.

Lithiumionenbatterien nutzen Kohlenstoff als negatives Elektrodenmaterial (bei Entladung: Lithiumanode) und metallhaltige Werkstoffe - in der Regel Metalloxide als positive Elektrode (bei Entladung: Kathodenanordnung).

Lithiumbatterien werden aus mehreren Lithiumzellen gebildet, die folgendermaßen aufgebaut sind: Die Lithiumanode (erste Elektrode) und die Kathodenanordnung (zweite Elektrode) sind durch eine Separatormembran voneinander getrennt, aber durch einen die Elektroden durchsetzenden Elektrolyten lithiumionenleitend miteinander verbunden. Anode und Kathode sind jeweils mit einem Stromsammler verbunden, der eine Stromableiterschicht bildet. Übliche Zellen sind mehrschichtig aufgebaut. Dabei wird anodenseitig auf eine Stromableiterschicht als Anodenaktivmaterial ein Kohlenstoffwerkstoff aufgebracht und kathodenseitig auf eine Stromableiterschicht ein Kathodenaktivmaterial, das in der Regel von einem Metalloxid gebildet wird. Zwischen beiden wird ein Separator angeordnet, die das die Anodenaktivmaterialschicht und die Kathodenaktivmaterialschicht voneinander trennt. Ein flüssiger oder auch fester das Elektrodenaktivmaterial durchsetzender Elektrolyt erlaubt den Transport von Lithiumionen Li⁺ zwischen den Elektroden.

Die Entwicklung neuer Lithiumzellen zielt darauf ab, höhere Zellspannungen, größere Leistung, höhere Kapazität (elektrische Ladung) und Sicherheit durch verbesserte Lithiumioneninterkalation und -deinterkalation zu erreichen oder auch durch das sogenannte "Lithium-Plating", bei dem das Abscheiden von metallischem Lithium bei hohen Ladeströmen, vermieden wird, sowie darauf, eine höhere Zyklen- und zeitliche Lebensdauer zu erreichen.

Dazu gibt es mehrere Ansätze: So werden beispielsweise zunehmend mit metallischem Lithium angereicherte Anodenaktivmaterialien eingesetzt, wodurch sich die theoretische Kapazität entsprechender Lithiumzellen erhöhen lässt. Solche Kompositelektroden sind beispielsweise aus der DE 10 2012 212 788 A1, der DE 10 2014 226 390 A1 bekannt. Aus der DE 10 2015 212 220 A1 sind auch poröse Lithiummonolithe mit einer Graphitbeschichtung bekannt.

Es gibt auch Ansätze anstelle von Stromableiterfolien oder Blechen durchlässige Gitterstrukturen oder Bauteile aus porösem Material einzusetzen. Gitterstrukturen sind beispielsweisen aus der US 6106978 A1, der US 626887 B und der US 20130309579 bekannt und poröses Metall als Stromableiter wird in der US 2015295246 A beschrieben.

Es gibt auch Ansätze, bei denen die Lithiumanode einen oberflächenstrukturierten Stromableiter bzw. eine oberflächenstrukturierte Schutzschicht aufweist, bei denen rahmenartige Strukturen umgrenzte Oberflächenabschnitte (Kavitäten) bilden, die mit Anodenaktivmaterial aufgefüllt werden können. Dadurch soll die Haftung zwischen dem Aktivmaterial und dem Stromableiter bzw. der Schutzschicht verbessert werden und mechanische Beeinträchtigung der Schutzschicht, z.B. ein Ablösen und/oder Bersten der Schutzschicht, verringert bzw. vermieden werden. Die Kavitäten können dabei genau so viel Volumen an Anodenaktivmaterial aufnehmen, sodass eine Kavität in geladenem Zustand, in dem das Anodenaktivmaterial ein höheres Volumen aufweist als im ungeladenen Zustand, genau ausgefüllt ist. Die Kavitäten weisen jedoch einen Boden auf, sodass eine lonenleitung durch den Boden nicht möglich ist. Der Boden beschränkt dabei auch die Volumenausdehnung beim Laden in eine Richtung.

Es gibt auch Ansätze, bei denen Partikel in blech- oder folienförmige Ableiter mit Vertiefungen eingebracht werden (vgl. DE 10 2012 112 186 A1). Auch hier wird lonenleitung durch den Ableiter verhindert.

Die US 7,736, 802 B1 offenbart einen Stromkollektor für eine elektrochemische Zelle, der ein leitendes Substrat mit draht- oder stabförmigen Leiterlitzen, die als ein Rahmen mit einem Maschengitter ausgebildet sind. Der Stromkollektor weist oberseitig und unterseitig des leitenden Substrats eine Beschichtung auf. Der Stromkollektor ist teilweise in einem Aktivmaterial eingebettet.

Die DE 10 2013 200 749 A1 offenbart eine negative Elektrode für Lithium-Ionen-Batterien, die einen Stromkollektor mit einer Oberfläche und einer Vielzahl von Lithium aufnehmenden Nanodrähten umfasst, wobei ein Ende jedes der Nanodrähte in dem Stromkollektor eingebettet ist. Jeder Nanodraht weist eine Umfangsbeschichtung über einem Abschnitt seiner Länge auf, der sich von der Oberfläche des Stromkollektors wegerstreckt.

Die DE 10 2013 201 853 A1 offenbart eine Elektrode mit einer porösen Kollektormatrix, in der zumindest eine Lithiumschicht oder Lithiumlegierungsschicht einlaminiert und somit darin eingebettet ist.

Es besteht also die Aufgabe eine Lithiumanode für eine Lithiumzelle bereitzustellen, bei der die oben dargestellten Nachteile, insbesondere im Zusammenhang mit der Volumenänderung beim Einlagern der Lithiumionen in ein Anodenaktivmaterial wenigstens teilweise gelöst werden.

Insbesondere kann eine Aufgabe darin gesehen werden, Lithiumzellen bzw. Lithiumbatterien bereitzustellen, bei denen keine oder nur geringe globale Volumenänderungen der Elektroden, sprich der Anode auftreten, wenn Lithiumionen eingelagert bzw. freigegeben werden.

Diese Aufgabe löst eine Lithiumanode gemäß Anspruch 1.

Nach einem ersten Aspekt wird eine Lithiumanode für eine Lithiumzelle und/oder eine Lithiumbatterie bereitgestellt, die Folgendes umfasst:
- eine Stromableiterschicht,
- ein Anodenaktivmaterial und
- eine Beschichtung.

Dabei ist die Stromableiterschicht gitterartig mit einer offenen, Hohlräume definierenden Leiterstruktur ausgebildet, das Anodenmaterial - z. B. ein hochkapazitives Material wie Si - ist in den Hohlräumen zwischen der Leiterstruktur angeordnet und die Beschichtung - z. B. ein Material mit geringerer spezifischer Kapazität, wie Graphit -deckt die Stromableiterschicht und das Anodenaktivmaterial ab.

Die gezielte räumliche Anordnung des Anodenaktivmaterials in den Hohlräumen zwischen der Leiterstruktur erlaubt es, dass das Anodenaktivmaterial beim Interkalieren bzw. Deinterkalieren sich dort gezielt ausdehnen bzw. zusammenziehen kann, ohne dass das Volumen, insbesondere Dicke der Schichten, verändert wird. Es findet eine weitgehend homogene Volumenänderung des Anodenaktivmaterials (z.B. Silizium, s. unten) statt, da das Anodenaktivmaterial gleichmäßig und gezielt in bzw. an der Anode verteilt ist.

Damit lässt sich die Lebensdauer einer solchen Zelle verlängern, da bei einer Verteilung des Anodenaktivmaterials in der leitenden Beschichtung (z.B. Graphit mit geringerer spezifischer Kapazität) inhomogene Verteilungen bzw. Bereiche mit höherem oder geringerem Anodenaktivmaterialanteil auftreten und dadurch ungleichmäßige Volumenänderungen die Aktivschicht zerstören oder schädigen können. Weiter erlauben die offenen Hohlräume, die eine Verbindung zwischen den beiden Seiten der Stromableiterschicht gewährleisten, eine lonenleitung zwischen diesen beiden Seiten. So ist es möglich, unterschiedliche Ladzustände zwischen den beiden Seiten auszugleichen. Unterschiedliche Ladezustände bedeuten Unterschiede in der Menge der bereits interkalierten Lithiumionen bzw. eine voneinander abweichende Lithiumkonzentration zwischen den beiden Seiten, die so durch die offenen Hohlräume ausgeglichen werden kann. Damit kann die Interkalation und Deinterkalation weiter homogenisiert werden. Ein solcher Ladungsausgleich ist bei geschlossenen Stromableiterschichten nicht möglich.

Die Perforation oder die offene Gestaltung der Hohlräume in der Stromableiterschicht schafft zusätzlichen Raum, in den das Anodenaktivmaterial eingebracht werden kann. Damit kann der Zusatz des Anodenaktivmaterials, beispielsweise ein Siliziumwerkstoff, volumenneutral erfolgen, da das durch die Perforation (offene Hohlräume) gewonnene Volumen ersetzt wird und kein zusätzliches Volumen an der stromableitenden Beschichtung in der ionenleitenden Beschichtung erforderlich ist.

Weitere vorteilhafte Ausgestaltungen der Erfindung ergeben sich aus den Unteransprüchen und der folgenden Beschreibung bevorzugter Ausführungsbeispiele der vorliegenden Erfindung.

In einer Weiterbildung der Erfindung sind vielfältige Gestaltungen der Leiterstruktur möglich. Es kann beispielsweise sogenanntes Streckmetall verwenden, bei dem Folien bzw. Bleche durch Schlitzen perforiert werden und dann ohne Materialverlust gestreckt werden, sodass aus den Schlitzen Maschen bzw. Hohlräume werden, die zur Aufnahme des Anodenaktivmaterials geeignet sind.

Eine andere Möglichkeit besteht darin Bleche oder Folien zu lochen bzw. zu perforieren. Auf diese Weise können genau abgestimmte Geometrien der Hohlräume gestaltet werden, bei denen Volumen, Form und Ausdehnung der Hohlräume genau auf die Eigenschaften des einzubringenden Anodenaktivmaterials abgestimmt werden können. Auch die stromleitenden Querschnitte der Leiterstruktur können so genau eingestellt werden.

Es gibt auch Ausführungen bei denen verschweißte bzw. verwebte Drahtanordnungen verwendet werden, mit denen ebenfalls eine werkstoffoptimierte und fertigungstechnisch besonders einfach herstellbare Gestaltung der Stromableiterschicht möglich ist. Dabei können beispielsweise die Durchmesser der Drähte und die Maschenweite genau aufeinander abgestimmt werden.

Ähnliche Effekte lassen sich auch mit dreidimensionalen Leiterstrukturen erzielen, bei denen beispielsweise gewirkte (oder gestrickte) Drahtanordnungen oder Drahtgelege (faserartig ungerichtete Strukturen) verwendet werden, um die Stromableiterschicht zu gestalten. Bei solchen dreidimensionalen Strukturen durchsetzen die Drähte die Schicht von einer Seite zur anderen und es können relativ dickwandige Stromableiterschichten hergestellt werden und dabei Drähte bzw. Leitermaterial mit vergleichsweise dünnen Durchmessern verwendet werden.

Im Anodenbereich bietet sich für die Gestaltung der Leiterstruktur ein Metallwerkstoff und insbesondere Kupfer an, das hervorragende elektrische Eigenschaften aufweist (kein Interkalations- bzw. Legierungsverhalten mit Lithium zeigt) und zudem sehr gut Wärme leitet. So können die beim zyklischen Interkalieren und Deinterkalieren stattfindenden thermischen Prozesse sehr gut ausgeglichen werden. Das heißt, der Wärmetransport aus der Lithiumanode bzw. aus der Lithiumzelle ist so einfach zu gewährleisten. Kupferwerkstoffe sind mechanisch fest, ausreichend korrosionsstabil und bieten im blanken Zustand eine gute Haftung des Anodenmaterials.

In einer Weiterbildung der Erfindung ist das Anodenaktivmaterial in den Hohlräumen der Stromableiterschicht durchlässig für Lithiumionen ausgebildet. Damit ist es möglich, den oben angesprochenen Ladungsausgleich zwischen den beiden Seiten der Stromableiterschicht zu verbessern.

Das Material in den Hohlräumen kann mit einem anderen Binder eingebracht werden, als die Beschichtung darüber. Für Silicium gut geeignete Binder haben nicht notwendigerweise perfekte Eigenschaften für Graphit. Eine Kombination zweier unterschiedlicher Binder kann sich also ebenfalls positiv auf die Lebensdauer der Anode auswirken.

Ähnliches gilt für eine Kathode, in der ein Prälithiierungsagens mit einem stabileren, dafür nicht so flexiblen Binder fixiert werden könnte.

In einer Weiterbildung umfasst das Anodenaktivmaterial einen Halbmetallwerkstoff, insbesondere Silizium. Im Gegensatz zu reinen Kohlenstoffwerkstoffen bieten Silizium und Siliziumlegierungen (z. B. solche , in denen das Silizium in eine Matrix aus Eisen, Magnesium etc. eingebunden ist) eine höhere Kapazität für die Einlagerung von Lithiumionen. Das Lithium kann in Form von Nanokristallen benutzt werden. Es ist möglich Nanofilme, Nanopartikel, Nanodrähte oder Nanoröhrchen bzw. hohle Partikel einzusetzen, bei denen die Volumenänderungen reduziert werden und die Zyklenstabilität beim Laden und Entladen weiter verbessert werden können. In Verbindung mit der erfindungsgemäßen Anordnung in den offenen Hohlräumen der Leiterstruktur kann so die Lebensdauer und Zyklenstabilität erhöht werden und es bestehen keinerlei Einschränkungen hinsichtlich der Wahl eines geeigneten bzw. optimierten Siliziumwerkstoffs.

Es ist auch möglich, als Anodenaktivmaterial ein Silizium-Graphitkomposit-Material zu verwenden, das die Vorzüge beider Materialien vereinigt. Silizium bietet dabei eine hohe Kapazität und der Kohlenstoff (z.B. Graphit) gewährleistet eine gute Elektronenleitfähigkeit und bietet die erforderliche mechanische Elastizität, die Volumenänderungen (innerhalb des zur Verfügung stehenden Volumens der Hohlräume) auszugleichen. Lebensdauer und Leistungsdaten können dabei weiter über die Struktur, Morphologie und die Zusammensetzung des Anodenaktivmaterials beeinflusst werden.

Es ist auch möglich, als Anodenaktivmaterial ein siliziumreiches Siliziumoxid-Material zu verwenden, wobei das Silizium eine hohe Kapazität bietet und die Oxid-Matrix für zusätzliche Stabilität der Anode sorgt, da eine höhere mechanische Elastizität die Volumenänderungen (innerhalb des zur Verfügung stehenden Volumens der Hohlräume) ausgleicht. Lebensdauer und Leistungsdaten können dabei weiter über die Struktur, Morphologie und die Zusammensetzung des Anodenaktivmaterials beeinflusst werden.

In einer Weiterbildung der Erfindung wird das Anodenaktivmaterial derart in den Hohlräumen der Leiterstruktur angeordnet, dass freies Volumen zwischen dem Anodenaktivmaterial und der Leiterschicht und/oder freies Volumen zwischen dem Anodenaktivmaterial und der Beschichtung ausgebildet ist. Auf diese Weise lässt sich die lokale Volumenänderung innerhalb eines Hohlraumes beim Interkalieren bzw. Deinterkalieren der Lithiumionen ohne jegliche globale Volumenänderung der Lithiumzelle realisieren. Das heißt, die Ausdehnung der Lithiumzellen bzw. der Batteriebausteine lässt sich wesentlich oder sogar vollständig vermeiden.

In einer Weiterbildung, in der die Beschichtung auf beiden Seiten der Stromableiterschicht angeordnet ist, lässt sich der Ladungsausgleich homogenisieren. Die Zellen lassen sich materialsparender fertigen und haben eine größere Lebensdauer.

In einer Weiterbildung in der Beschichtung aus einem Lithiumionen-leitenden Werkstoff ausgebildet, lässt sich der Lithiumionentransport zum Anodenaktivmaterial, welches in den Hohlräumen der Stromableiterschicht angeordnet ist, zuverlässig realisieren.

Dazu sind insbesondere Kohlenstoffwerkstoffe geeignet. Kohlenstoffe sind wegen ihrer mechanischen Stabilität und guter Leitfähigkeit bestens geeignet. Sie können als Graphit, als harter Kohlenstoff, als weicher Kohlenstoff oder auch als Kohlenstoffröhrchen bzw. Nanoröhrchen vorliegen.

Insbesondere aus Polymerharzen gewonnene Hartkohlenstoffe sind sehr gut für hohe Ströme geeignet. Sie bieten zwar im Vergleich zu Naturgraphit nur eine geringe Ladungskapazität (Aufnahme von Lithiumionen). So eine erhöhte Kapazität ist aber im vorliegenden Fall nicht erforderlich, da die Ladekapazität durch das Anodenaktivmaterial, sprich das Silizium, in den Hohlräumen der Stromableiterschicht gewährleistet ist.

Andere Anodenwerkstoffe mit hoher Stromfestigkeit sind z. B. Zinn und Li4Ti5O12 (LTO), ein Zero-Strain-Material (nahezu keine Volumenänderung beim Zyklisieren), das in äußerst langlebigen Zellen Anwendung findet, aber keine besonders hohe Kapazität und eine etwas erhöhte Spannungslage hat. Auch Germanium kann den Interkalationsprozess positiv beeinflussen kann, da die Kinetik der Einlagerung verbessert wird.

Eine erfindungsgemäße Lithiumbatterie weist eine erfindungsgemäße Lithiumanode auf, eine Kathode bzw. eine Kathodenanordnung, einen Kathode und Anode durchsetzenden Elektrolytwerkstoff und einen Separator, der die Lithiumanode von der Kathode bzw. der Kathodenanordnung trennt. So eine Lithiumbatterie kann mit hoher Kapazität und langer Lebensdauer und mit geringen Volumenänderungen während der Ladezyklen hergestellt werden.

Ein Verfahren zur Herstellung einer erfindungsgemäßen Lithiumanode umfasst Folgendes:
a. Bereitstellen einer Stromableiterschicht, die gitterartig mit einer offenen Hohlräume definierenden Leiterstruktur ausgebildet ist.
b. Anordnen von Anodenaktivmaterial in den Hohlräumen zwischen der Leiterstruktur und
c. Beschichten der Stromableiterschicht mit einem lithiumleitenden Werkstoff (z.B. Graphit).

Auf diese Weise lässt sich eine erfindungsgemäße Lithiumanode in drei einfachen Verfahrensschritten herstellen:
Das Bereitstellen der Stromableiterschicht umfasst dabei einfache Herstellungsverfahren, wie Fügeverfahren und/oder mechanische Bearbeitungsverfahren mit denen die Leiterstruktur hergestellt und vorbereitet werden kann.

In einer Weiterbildung des Verfahrens kann das Anordnen des Anodenaktivmaterials in die Hohlräume zwischen der Leiterstruktur beispielsweise in einem Tauchprozess stattfinden, bei dem das Anodenaktivmaterial die Leiterstruktur benetzt und dann die Hohlräume entsprechend ausfüllt. Je nach Gestaltung der Leiterstruktur und der Zubereitung der Tauchflüssigkeit kann so auch gezielt freies Volumen (beispielsweise durch Oberflächenspannungseffekte der Tauchflüssigkeit) geschaffen werden, in die hinein sich das Anodenaktivmaterial beim Interkalieren ausdehnen kann.

Andere Verfahren zum Anordnen des Anodenaktivmaterial können Walzprozesse sein, bei denen beispielsweise eine pastenartig vorliegende Anodenaktivmaterialmischung in die Hohlräume eingewalzt bzw. eingepresst wird. Es können auch Rakelverfahren vorgesehen werden, bei denen entsprechendes Material in die Hohlräume eingestrichen wird.

Es ist auch möglich Tauch- Walz- oder Rakelprozesse miteinander zu kombinieren.

### Beschichtete Anode

Eine andere Lithiumanode für eine Lithiumzelle und/oder eine Lithiumbatterie umfasst dabei eine Stromableiterschicht, ein Anodenaktivmaterial und eine Beschichtung. Dabei ist die Stromableiterschicht gitterartig mit einer offene Hohlräume definierenden Leiterstruktur ausgebildet und dass Anodenaktivmaterial ist als Schicht (insbesondere umhüllende Schicht) auf der Oberfläche der Leiterstruktur angeordnet und die Beschichtung deckt die Stromableiterschicht und damit auch das umhüllende Anodenaktivmaterial ab.

Weiter ist eine die Hohlräume ausfüllende Füllung vorgesehen, die mit dem Anodenaktivmaterial und der Beschichtung gekoppelt (ionisch und elektronisch leitend) ist. Das Anodenaktivmaterial bildet dabei eine die Leiterstruktur umhüllende Schicht mit einer erhöhten Lithiumionenkapazität. Über die Geometrie der Leiterstruktur (insbesondere aus Kupfer ausgebildet, s.o.) kann die zur Verfügung stehende Oberfläche, die mit dem Anodenaktivmaterial beschichtet bzw. von diesem umhüllt wird, so verändert werden, dass die zur Verfügung stehende Oberfläche für die Beschichtung mit dem Anodenaktivmaterial optimiert wird.

Dabei kann die Größe, Geometrie und die Anordnung der Hohlräume so optimiert werden, dass ein verbesserter Lithiumionenfluss durch die Beschichtung und durch die Füllung in das Anodenaktivmaterial und umgekehrt gewährleistet ist und gleichzeitig ein Elektronenfluss durch die Leiterstruktur gewährleistet ist.

Die Merkmale hinsichtlich Leiterstruktur, Werkstoff (Kupfer) und des Anodenaktivmaterials (Si) entsprechen den oben beschriebenen Merkmalen der erfindungsgemäßen Lithiumanode.

In einer Weiterbildung der Erfindung ist die Füllung derart in der Leiterstruktur angeordnet, dass freies Volumen zwischen dem Anodenaktivmaterial und der Füllung ausgebildet ist und/oder die Beschichtung derart auf der Stromableiterschicht und der Füllung ausgebildet ist, dass freies Volumen zwischen dem Anodenaktivmaterial und der Beschichtung ausgebildet ist. Solche Bereiche mit freiem Volumen erlauben es, dass sich die Beschichtung während der Interkalation von Lithiumionen gezielt in diese Bereiche mit sog. freiem Volumen ausdehnen kann. Damit findet nur eine lokale Volumenveränderung des Anodenaktivmaterials statt und ein globales Ausdehnen bzw. Schrumpfen der Lithiumanode oder der Lithiumzelle wird damit weitgehend unterbunden.

Die stattfindende Volumenausdehnung beim Interkalieren von Lithium in das Anodenaktivmaterial erfolgt homogen um die Leiterstruktur herum. Diese Ausdehnung wird entweder durch definiert vorhandenes freies Volumen kompensiert oder aber dadurch, dass der lithiumleitende Werkstoff - in der Regel ein Kohlenstoffwerkstoff - eine vergleichsweise hohe Volumenelastizität aufweist, der diese Volumenänderungen kompensieren kann. Eine globale Volumenänderung der Lithiumanode wird weitgehend vermieden; gleichzeitig sind die Beschichtungen auf den beiden Seiten der Leiterstruktur über die verbindenden Füllungen, welche die Hohlräume durchsetzen, fest miteinander verbunden. Dies erhöht die mechanische Stabilität der lithiumionenleitenden Beschichtung und damit auch die Lebensdauer der Lithiumanode bzw. einer mit einer solchen Lithiumanode versehenen Zelle.

Die gleichmäßige Umschließung der Leiterstruktur mit dem Anodenaktivmaterial (Silizium) verhindert auch die Problematik des Ablösens des Aktivmaterials, da das Aktivmaterial vollständig von lithiumionenleitendem Werkstoff umschlossen ist und so gleichmäßig mit Lithiumionen versorgt wird, so dass eine sehr ausgeglichene Interkalation der Lithiumionen stattfindet und eine homogene Volumenänderung die lokalen Spannungen im Anodenaktivmaterial (in der Siliziumschicht) weitgehend verhindert. Dieser Effekt erhöht ebenfalls die Lebensdauer einer solchen Lithiumanode bzw. einer mit so einer Lithiumanode versehenen Lithiumzelle.

Die Merkmale hinsichtlich Beschichtung (Kohlenstoffwerkstoff), einer Lithiumbatterie und eines Verfahrens zur Herstellung einer solchen Anode entsprechen den oben beschriebenen Merkmalen der erfindungsgemäßen Lithiumanode.

In einer Weiterbildung des Verfahrens wird das Anodenaktivmaterial mittels eines physikalischen oder eines chemischen Verfahrens aufgebracht. Üblicherweise dienen dazu sog. Schichtabscheideverfahren, bei denen zwischen physikalischen Verfahren und chemischen Verfahren unterschieden wird ( PVD-physical vapour deposition, CVD-chemical vapour deposition). Bei den PVD-Verfahren sind Aufdampf-, Aufschleuder- oder Sputterverfahren verbreitet.

Beim Aufdampfen wird die an einem Probenhalter fixierte Leiterstruktur in einer Vakuumkammer angeordnet, in der das Anodenaktivmaterial (Silizium) aufgeheizt und verdampft wird. Das so verdampfte Anodenaktivmaterial bzw. das Silizium schlägt sich dann an der Kupferstruktur nieder und umhüllt diese gleichmäßig. Zur Prozessverbesserung kann der Probenhalter drehbar bzw. beweglich gestaltet werden, damit eine gleichmäßige Beschichtung der Leiterstruktur erfolgen kann.

Alternative Beschichtungsverfahren können die Kathodenzerstäubung, und das ALD (atomic layer deposition)-Verfahren sein. Bei diesem Verfahren sind jedoch nur relativ geringe Schichtdicken erreichbar.

Gemäß einem weiteren Aspekt des Verfahrens wird die Stromableiterschicht mit einem Lithium-Ionen-leitenden bzw. lithiumleitenden Werkstoff (insbesondere einem Kohlenstoffwerkstoff oder Lithiumtitanat, LTO, Li4Ti5O12) in einem Tauch- und/oder einem Walzprozess versehen, bei dem ebenfalls die Füllung der Hohlräume mit dem lithiumionenleitenden Werkstoff (dem Kohlenstoff) ausgebildet wird.

Dabei wird die Leiterstruktur vollständig in den lithiumleitenden Werkstoff bzw. den lithiumionenleitenden Werkstoff eingebettet. Es entsteht also eine homogene Struktur, bei der das beschichtete Gitter (die Leiterstruktur) vollständig in den lithiumleitenden Werkstoff eingebettet ist. Die Hohlräume sind gefüllt und die Beschichtung ist auf beiden Seiten des Gitters angeordnet. Gegebenenfalls sind Bereiche mit freiem Volumen definiert. Es besteht aber ein Übergang zwischen den Beschichtungen der beiden Seiten durch die Füllung, welche die Hohlräume durchsetzt. So werden unterschiedliche Ladezustände, also Unterschiede in der Menge bereits interkalierten Lithiums bzw. die Lithiumkonzentration zwischen den beiden Seiten ausgeglichen.

### Kathodenanordnunq

Bei modernen Lithiumzellen gibt es Ansätze, die Lithiumanoden (Lithiumzellen) mit zusätzlichem Lithium anzureichern (man spricht von sog. Prälithiierung oder *prelithiation*). Dabei soll ein irreversibler Kapazitätsverlust während der Formierung (SEI-Bildung, erste Ladezyklen) vermieden bzw. verringert werden, der dadurch entsteht, dass zyklisierbares Lithium bei der SEI-Bildung gebunden wird. SEI *(Solid Electrolyte Interface)* bezeichnet eine Schicht, die an der Grenzfläche des Anodenaktivmaterials (Silizium, Kohlenstoffwerkstoff oder andere) der Anode und dem Elektrolyten entsteht. Dabei wird Lithium irreversibel eingebunden.

Zur Prälithiierung sind mehrere Möglichkeiten bekannt. Die US 2014/227432 A sieht den Einsatz von festem metallischen Lithiumpulver im Anodenaktivmaterial vor. Es gibt auch Ansätze, bei denen Lithiumsalze in die negative Elektrode (Anode) zur Prälithiierung eingebracht werden (vgl. z.B. US 2015/364795 A). Ein Ansatz zur Prälithiierung der Kathode ist in der CN 1006058168 A beschrieben. Hier wird nanoskaliges Lithiumfluorid dem Kathodenwerkstoff hinzugefügt.

Beim Prälithiieren des Kathodenwerkstoffs kann jedoch das Problem bestehen, dass während/nach dem ersten Laden bzw. bei/nach der SEI-Bildung Volumeneffekte im Kathodenmaterial auftreten, die dadurch entstehen, dass dort das Lithium aus dem Prälithiierungsagens entfernt wird (welches in die SEI-Bildung bzw. in die Anode wandert) und dort strukturelle Probleme verursachen können. Es besteht also Bedarf an verbesserten Kathodenwerkstoffen bzw. Kathodenanordnungen, die eine optimierte Prälithiierung erlauben, bei denen die oben genannten Nachteile zumindest teilweise ausgeräumt werden.

Diese Aufgabe löst die folgende Kathodenanordnung.

Die Kathodenanordnung zum Prälithiieren einer Lithiumzelle umfasst eine Stromableiterschicht, ein lithiumbasiertes Material und eine Beschichtung, wobei die Stromableiterschicht gitterartig mit einer offene Hohlräume definierenden Leiterstruktur ausgebildet ist, das lithiumbasierte Material in den Hohlräumen zwischen der Leiterstruktur angeordnet ist und die Beschichtung die Stromableiterschicht und das lithiumbasierte Material abdeckt.

Die Gestaltung der Leiterstruktur entspricht den im Zusammenhang mit den oben beschriebenen Lithiumanoden dargestellten Leiterstrukturen.

In einer Weiterbildung der Erfindung ist die Leiterstruktur aus einem Metallwerkstoff, insbesondere Aluminium, ausgebildet. Aluminium bietet sehr gute Stromleitungseigenschaften und ist chemisch geeignet als Werkstoff für eine Kathodenanordnung, bei dem Werkstoffe wie LCO - Lithium Cobalt Oxid (LiCoO2); NMC - Lithium Nickel Cobalt Mangan Oxid [Li(Ni,Co,Mn)O2]; NCA - Lithium Nickel Cobalt Aluminium Oxid [Li(Ni,Co,Al)O2]; LFP - Lithium Eisen Phosphat (LiFePO4) und LMO - Lithium Mangan Oxid (LiMn2O4) (siehe unten) zum Einsatz kommen.

Das lithiumbasierte Material ist in einer Weiterbildung der Erfindung insbesondere als Lithiumoxid, als Lithiumnitrat, als Lithiumnitrid und/oder als stabilisiertes Lithiumpulver vorgesehen. Insbesondere mit Lithiumnitrat lassen sich sehr gute Prälithiierungsergebnisse erzielen.

Dadurch, dass das lithiumbasierte Material in den offenen Hohlräumen der Leiterstruktur der Kathodenanordnung vorgesehen ist, kann das zusätzliche Lithiumvolumen neutral eingebracht werden. Ein weiterer Vorteil besteht darin, dass nach dem Prälithiieren elektrochemisch inaktive Rückstände des lithiumbasierten Materials in den Hohlräumen und nicht im Volumen des eigentlichen Kathodenmaterials, mit dem die Stromableiterschicht beschichtet ist, verbleiben und damit ionische bzw. elektronische Pfade in der Beschichtung nicht blockieren können.

Die beidseitige Beschichtung erlaubt einen Zellaufbau, bei dem mit einer Kathodenanordnung zwei Anoden bedient werden können.

Die Beschichtung der Leiterstruktur bzw. der Stromableiterschicht ist aus einem Kathodenaktivmaterial ausgebildet, insbesondere Werkstoffe wie LCO - Lithium Cobalt Oxid (LiCoO2); NMC - Lithium Nickel Cobalt Mangan Oxid [Li(NiCoMn)O2]; NCA - Lithium Nickel Cobalt Aluminium Oxid [Li(NiCoAl)O2]; LFP - Lithium Eisen Phosphat (LiFePO4) und LMO - Lithium Mangan Oxid (LiMn2O4) bieten besonders gute Eigenschaften in der Kathodenanordnung.

Das Verfahren zur Herstellung entspricht dem im Zusammenhang mit den Lithiumanoden dargestellten Verfahren.

Die Verwendung so einer Kathodenanordnung zum Prälithiieren einer Lithiumanode, einer Lithiumzelle bzw. einer Lithiumbatterie erlaubt es, den Verlust von aktivem Lithium auszugleichen, insbesondere in der Phase der SEI-Bildung. Damit kann die Energiedichte einer solchen Lithiumionenzelle bzw. einer Lithiumionenbatterie erhöht werden.

Ausführungsbeispiele der Erfindung werden nun beispielhaft und unter Bezugnahme auf die beigefügte Zeichnung beschrieben, in der diese zeigen:
- Fig. 1: eine schematische Darstellung eines Ausschnitts eines ersten Ausführungsbeispiels einer erfindungsgemäßen Lithiumanode,
- Fig. 2: eine Schnittansicht der in Fig. 1 dargestellten Lithiumanode,
- Fig. 3: eine aus Streckmetall ausgebildete Leiterstruktur,
- Fig. 4: eine perforierte bzw. gelochte Leiterstruktur, die als Folie oder Blech ausgebildet ist mit unterschiedlichen Lochbildern,
- Fig. 5: eine Ansicht einer Leiterstruktur mit verschweißten Leiterelementen,
- Fig. 6: ein Querschnitt der in Fig. 5 dargestellten Leiterstruktur,
- Fig. 7: eine als Flies oder Drahtgelege ausgebildete Leiterstruktur,
- Fig. 8: eine gewirkte Leiterstruktur,
- Fig. 9: eine schematische Darstellung eines Verfahrens zur Herstellung einer erfindungsgemäßen Lithiumanode,
- Fig. 10: eine schematische Darstellung eines zweiten Ausführungsbeispiels einer Lithiumanode,
- Fig. 11: eine Schnittdarstellung der in Fig. 10 dargestellten Lithiumanode,
- Fig. 12: einen schematisch dargestellten Verfahrensablauf zur Herstellung der in Fig. 10 dargestellten Lithiumanode,
- Fig. 13: eine schematische Darstellung eines Beschichtungsverfahrens zur Herstellung der in Fig. 10 dargestellten Lithiumanode,
- Fig. 14: eine schematische Darstellung eines Ausführungsbeispiels einer erfindungsgemäßen Kathodenanordnung,
- Fig. 15: eine Schnittdarstellung der in Fig. 14 dargestellten Kathodenanordnung,
- Fig. 16: eine schematische Darstellung einer erfindungsgemäßen Lithiumionenzelle mit Lithiumanoden gemäß einem ersten Ausführungsbeispiel und einer erfindungsgemäßen Kathodenanordnung,
- Fig. 17: die in Fig. 16 dargestellten Lithiumionenzelle mit Lithiumanoden gemäß einem zweiten Ausführungsbeispiel.

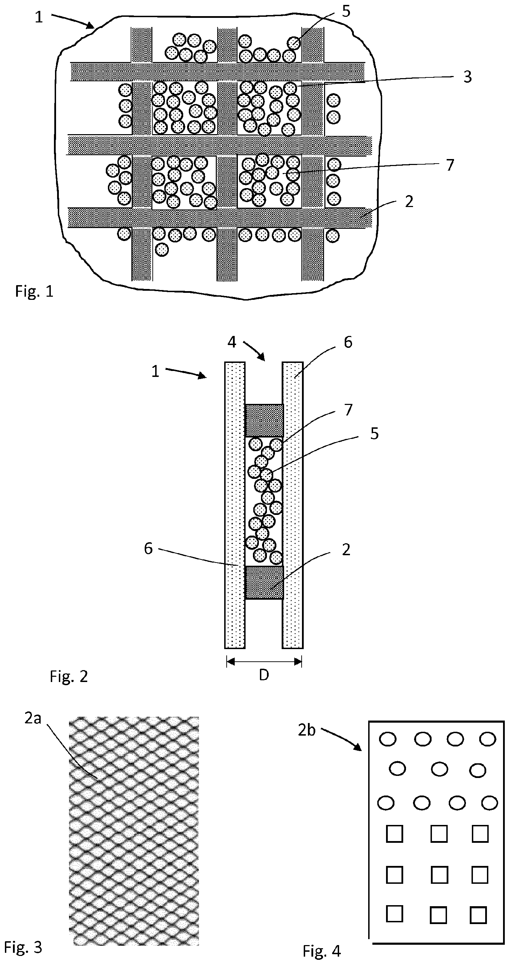

Die in Fig. 1 dargestellte Ansicht einer erfindungsgemäßen Lithiumanode 1 ist folgendermaßen aufgebaut: eine Leiterstruktur 2 ist hier aus einem Leitergitter mit rechteckigen Maschen 3 gebildet, die offene Hohlräume definieren. Die Leiterstruktur 2 kann aus unterschiedlichen Werkstoffen (siehe unten) aufgebaut sein und bildet eine im Wesentlichen ebene Stromableiterschicht 4 (siehe Fig. 2).

In den Maschen 3 ist Anodenaktivmaterial 5 angeordnet, das aus einem Siliziumwerkstoff gebildet wird. Die Stromableiterschicht 4 ist auf beiden Seiten mit einer Beschichtung 6 versehen, die in elektrischem Kontakt mit der Leiterstruktur 2 angeordnet ist. Die Beschichtung ist aus einem lithiumleitenden Werkstoff, insbesondere einem Kohlenstoffwerkstoff, ausgebildet, der folgende Werkstoffe umfassen kann: Graphit, harter Kohlenstoff, weicher Kohlenstoff, Kohlenstoffnanoröhrchen, Vapor Grown Carbon Fibers und andere zum Lithiumionentransport geeignete Anodenwerkstoffe. In den Maschen 3 ist der Siliziumwerkstoff 5 so angeordnet, dass freies Volumen 7 vorgesehen ist.

Freies Volumen ist in diesem Zusammenhang nicht unbedingt als offener oder leerer Hohlraum zu verstehen, sondern kann auch mikroskopisch als freies Volumen angesehen werden, in das sich der Siliziumwerkstoff 5 bei der Aufnahme von Lithiumionen (Interkalation) ausdehnen kann. Das Anodenaktivmaterial 5 (Siliziumwerkstoff) ist ebenfalls in elektrischer Verbindung mit der Leiterstruktur 2 und der Beschichtung 6.

Es ist auch möglich, dass die Beschichtung 6 in die Hohlräume 3 (Maschen) der Leiterstruktur 2 teilweise hineinragt und das Anodenaktivmaterial 5 berührt oder sogar wenigstens teilweise umschließt.

Die Funktion der Lithiumanode gemäß dem ersten Ausführungsbeispiel ist wie folgt. Beim Interkalieren von Lithiumionen in das Anodenaktivmaterial (der Siliziumwerkstoff) findet eine Volumenänderung des Anodenaktivmaterials 5 statt - es dehnt sich aus. Das freie Volumen 7 in den offenen Hohlräumen 3 stellt den erforderlichen Raum für diese Ausdehnung zur Verfügung. Dabei verändert sich die Gesamtdicke D der Lithiumanode 1 nicht. In anderen Worten, die lokal in den Hohlräumen 3 stattfindende Volumenänderung findet nur lokal statt und verursacht keine globale Ausdehnung der Lithiumanode 1.

Die Figuren 3 bis 8 zeigen mögliche Alternativen von Leiterstrukturen. In Fig. 3 ist eine Leiterstruktur 2a dargestellt, die aus einem Streckmetall gebildet wird.

In Fig. 4 sind alternative Loch- bzw. Perforationsbilder (runde Lochung, eckige Lochung) in einer Metallfolie 2b dargestellt. Neben den dargestellten runden und viereckigen Lochungen können auch andere Loch- oder Schlitzbilder vorgesehen werden, die genau auf die gewünschten Eigenschaften der Lithiumanode abgestimmt sein können.

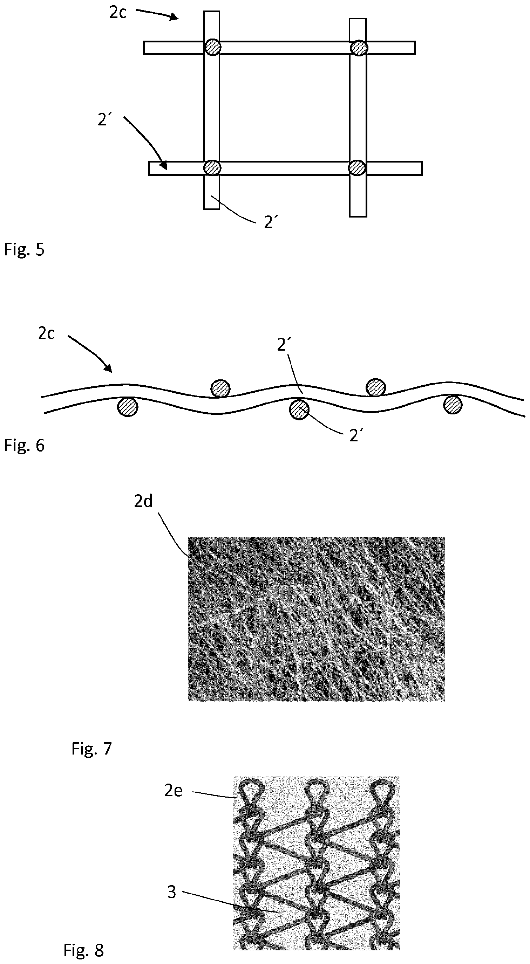

Fig. 5 und 6 zeigen eine offene Gewebestruktur 2c, die aus runden Drähten 2' gebildet wird und die optional an ihren Berührungsstellen leitend aneinander gefügt sind (z.B. verschweißt, verlötet, verpresst). Anstelle der dargestellten runden Drahtquerschnitte können auch andere Querschnittsgeometrien genutzt werden. So ist es möglich, ovale oder auch bandförmige Leiter anstelle der Drähte zu verwenden.

Fig. 7 zeigt eine Drahtfliesstruktur 2d, in deren Hohlräume das Anodenaktivmaterial eingebracht werden kann.

Fig. 8 zeigt eine Wirk- oder Strickstruktur 2e, in der ebenfalls durch Wahl einer besonderen Wirktechnik Maschen 3 mit dreidimensionaler Ausdehnung realisiert werden können.

Die Eigenschaften einer so ausgeführten Lithiumanode 1 lassen sich insbesondere durch die Geometrie der Leiterstruktur 2, d.h. durch die Ausdehnung der stromleitenden Bereiche (Dicke und Breite) sowie durch die Größe und Geometrie der offenen Hohlräume bestimmen, in denen das Anodenaktivmaterial angeordnet wird. Dadurch lässt sich auch die Menge des Anodenaktivmaterials steuern, so dass entsprechendes freies Volumen 7 zur Verfügung steht, welches die Ausdehnung des Anodenaktivmaterials 5 (des Siliziumwerkstoffs) während der Interkalation aufnimmt.

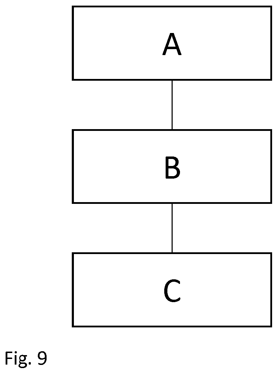

Fig. 9 zeigt den Ablauf eines erfindungsgemäßen Verfahrens zur Herstellung einer Lithiumanode gemäß dem ersten Ausführungsbeispiel. Das Verfahren umfasst den
Schritt A - Bereitstellen einer Stromableiterschicht 4, die gitterartig mit einer offene Hohlräume 3 definierenden Leiterstruktur 2 ausgebildet ist,
Schritt B - Anordnen von Anodenaktivmaterial 5 in den Hohlräumen 3 zwischen der Leiterstruktur 2 und
Schritt C - Beschichten der Stromableiterschicht 4 mit einem lithiumleitenden Werkstoff 6, der ggf. ebenfalls Speichereigenschaften aufweisen kann.

Dabei umfasst der Schritt A optional das Bereitstellen, Herstellen und/oder Vorbereiten der Leiterstruktur 2 durch eine Fügeverfahren und/oder ein mechanisches Bearbeitungsverfahren. Typische Fügeverfahren sind hier Verschweißen, Verpressen, Verlöten und ggf. auch Verkleben. Typische mechanische Bearbeitungsverfahren sind hier Stanz- oder Schneidverfahren, mit deren Hilfe die Hohlräume aus einer Metallfolie oder einem Metallblech hergestellt werden, aber auch Strick-, Webe- bzw. andere Anordnungsverfahren, in denen stromleitende Drähte in die gewünschte Form und Anordnung gebracht werden (vgl. Fig. 5 bis 8).

Der Schritt B des Verfahrens umfasst einen Tauchprozess, mit dem das Anodenaktivmaterial in den Hohlräumen 3 der Leiterstruktur 2 angeordnet wird. Das Anodenaktivmaterial kann aber auch im Walz- oder Streichverfahren in die Hohlräume 3 eingefüllt werden.

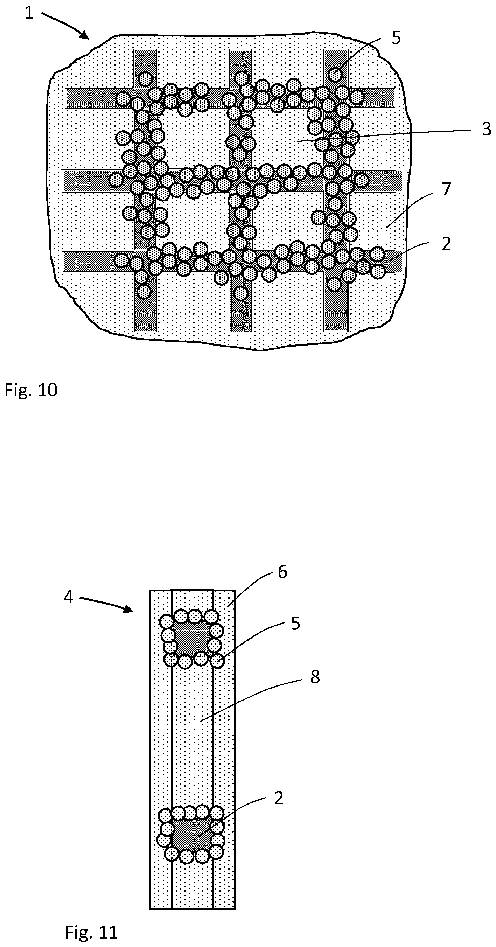

Fig. 10 zeigt ein zweites Ausführungsbeispiel einer Lithiumanode 1, bei der das Anodenaktivmaterial anders angeordnet ist. Die hier dargestellte Lithiumanode 1 umfasst ebenfalls eine Leiterstruktur 2, die offene Hohlräume 3 definiert und wesentlicher Bestandteil der Stromableiterschicht 4 ist (siehe Fig. 11). Im Unterschied zum ersten Ausführungsbeispiel ist jedoch hier das Anodenaktivmaterial (der Siliziumwerkstoff) 5 als Schicht auf der Oberfläche der Leiterstruktur angeordnet, so dass sie die Leiterstruktur umhüllt. Analog zum ersten Ausführungsbeispiel ist hier ebenfalls eine Beschichtung 6 vorgesehen sowie eine Füllung 8 der Hohlräume 3 der Leiterstruktur. Beschichtung 6 und 8 sind aus einem lithiumionenleitenden Werkstoff ausgebildet, insbesondere aus einem Kohlenstoffwerkstoff (siehe oben). Auch hier sind freie Hohlräume vorgesehen, die eine lokale Ausdehnung des Anodenaktivmaterials bei der Interkalation erlauben. Die Ausdehnung kann beispielsweise in die offenen Hohlräume 3 hinein erfolgen. Sie kann aber auch in mikroskopisch vorhandenes freies Volumen in der Füllung 8 bzw. in der Beschichtung 6 erfolgen, die jeweils elektrisch leitend mit dem Anodenaktivmaterial gekoppelt sind. Die umhüllende Beschichtung der Leiterstruktur 2 mit Anodenaktivmaterial 5 erlaubt eine besonders alterungsbeständige Kopplung mit der Leiterstruktur. Die bei der Interkalation und Deinterkalation auftretenden Volumenveränderungen verursachen durch die vollständige Umhüllung keine lokalen Ablösungseffekte von der Leiterstruktur bzw. verringern diese Effekte im Gegensatz zu ebenen, undurchlässigen Leiterstrukturen. Geeignete Leitergeometrien für diese Leiterstrukturen sind die gleichen wie oben in Verbindung mit den Figuren 3 bis 8 beschrieben.

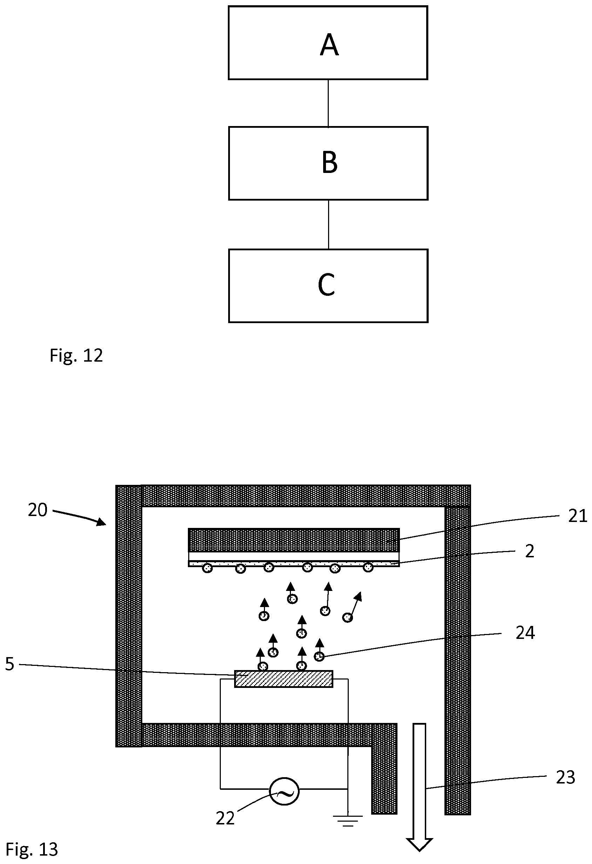

Ein Verfahren zur Herstellung einer erfindungsgemäßen Lithiumanode gemäß dem zweiten Ausführungsbeispiel (siehe Fig. 12) umfasst die Schritte
A - Bereitstellen einer Stromableiterschicht, die gitterartig mit einer offene Hohlräume definierenden Leiterstruktur ausgebildet ist,
B - das Anordnen von Anodenaktivmaterial auf der Leiterstruktur, d.h. das umhüllende Beschichten der einzelnen Leiterabschnitte und
C - das Beschichten der Stromableiterschicht mit einem lithiumleitenden Werkstoff.

Der Schritt A umfasst dabei ebenfalls das oben beschriebene Bereitstellen, Herstellen und Vorbereiten der Leiterstruktur durch ein Fügeverfahren und/oder ein mechanisches Bearbeitungsverfahren.

Das Anordnen des Anodenaktivmaterials 5 auf der Leiterstruktur 2 umfasst ein physikalisches und/oder ein chemisches Verfahren und insbesondere ein in Fig. 13 dargestelltes Aufdampfverfahren. Dabei wird in einer evakuierbaren Beschichtungskammer 20 eine Leiterstruktur 2 angeordnet, die an einem Objektträger 21 fixiert wird. Zur Verbesserung des Beschichtungsergebnisses kann dieser Objektträger beweglich bzw. drehbar in der Kammer 20 angeordnet werden. Der Siliziumwerkstoff 5 wird über eine Heizung 22 verdampft und schlägt sich in der über eine Vakuumpumpe 23 evakuierten Kammer auf der Leiterstruktur 2 nieder. Das Bedampfungsergebnis lässt sich ggf. durch Anlegen einer Spannung zwischen dem Anodenaktivmaterial und der Leiterstruktur verbessern, damit lassen sich die verdampften Partikel 24 gezielt auf die Leiterstruktur richten.

### Kathodenanordnunq

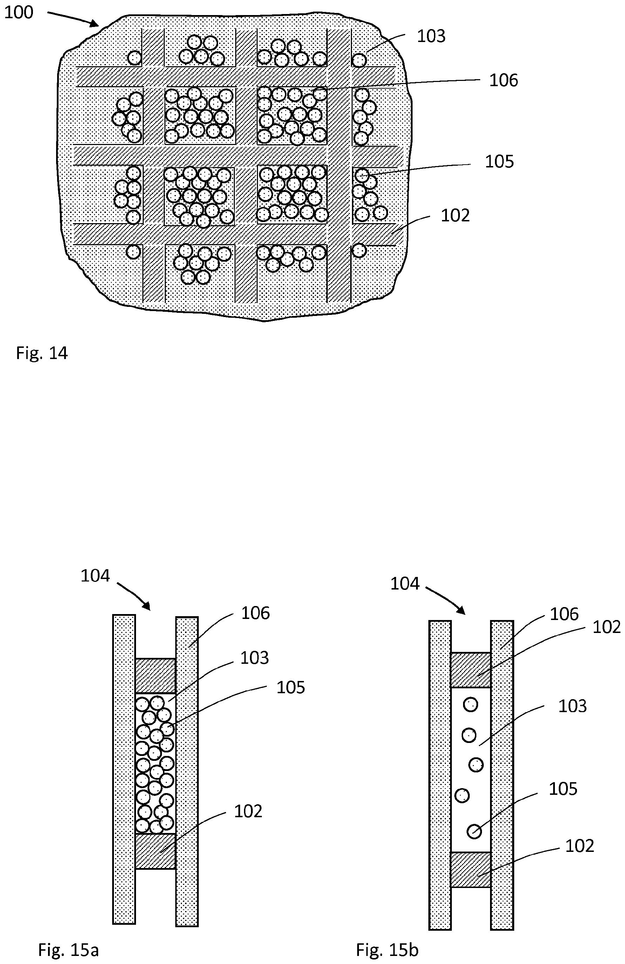

Fig. 14 zeigt eine schematische Ansicht eines Ausführungsbeispiels einer Kathodenanordnung 100, die zum Prälithiieren einer Lithiumzelle geeignet ist. Sie umfasst eine Leiterstruktur 102, die gitterartig ausgebildet ist, die Maschen 103 aufweist, die offene Hohlräume in der Leiterstruktur definieren. Diese bilden eine Stromableiterschicht 104. In den offenen Hohlräumen (Maschen 3) ist ein lithiumbasiertes Material 105 angeordnet. Die Stromableiterschicht 104 ist auf beiden Seiten, mindestens jedoch auf einer Seite mit einer Beschichtung 106 versehen. Die Leiterstruktur 102 ist vorzugsweise aus einem Aluminiumwerkstoff ausgebildet (z.B. Nickel, Gold, Platin, Zirconium, Titan, Tantal, verschiedene Stähle und Legierungen wie Monel, leitfähiger gehärteter Kohlenstoff, polymerdurchsetzte leitfähige Faserverbundstoffe).

Die Struktur und Gestaltung der Leiterstruktur 102 ist analog zu der im Zusammenhang mit den oben beschriebenen Lithiumanoden 1 ausgebildet. Sie kann ebenfalls alternativ zu der in Fig. 14 und 15 dargestellten Gitterstruktur mit rechteckigem Leiterquerschnitt entsprechend den in den Figuren 3 bis 8 dargestellten Varianten ausgebildet sein.

Das lithiumbasierte Material wird von einem lithiumhaltigen Werkstoff wie Lithiumnitrat, Lithiumoxid, einem Lithiumnitrid oder auch einem stabilisierten Lithiumpulver gebildet. Es füllt den durch die Leiterstruktur und die Beschichtung 106 definierten Hohlraum ganz oder teilweise aus (vgl. Fig. 15a und 15b).

Die Beschichtung 106 wird aus einem geeigneten Kathodenaktivmaterial gebildet, das beispielsweise einen der folgenden Werkstoffe umfasst:
- LCO - Lithium Cobalt Oxid (LiCoO₂);
- NMC - Lithium Nickel Cobalt Mangan Oxid [Li(NiCoMn)O₂];
- NCA - Lithium Nickel Cobalt Aluminium Oxid [Li(NiCoAl)O₂];
- LFP - Lithium Eisen Phosphate (LiFePO4) und
- LMO - Lithium Manganese Oxide (LiMn₂O₄).

Das lithiumbasierte Material 105 in den Hohlräumen 103 dient zum Prälithiieren einer Lithiumanode, um beispielsweise den Lithiumverlust beim Bilden einer SEI-Schicht in den ersten Ladezyklen auszugleichen. Dabei wird ein Teil des lithiumbasierten Materials 105 verbraucht und es entsteht in dem Hohlraum 103 zusätzliches freies Volumen (vgl. Fig. 15b). Der Abbau von lithiumbasiertem Material aus dem Hohlraum führt aber nicht zu einer Volumenveränderung der Kathodenanordnung insgesamt. Das bedeutet, es findet keine Volumenänderung einer entsprechend ausgebildeten Kathodenanordnung bzw. einer entsprechend mit einer solchen Kathodenanordnung versehenen Lithiumbatterie statt.

Das Herstellungsverfahren verläuft analog zu dem im Zusammenhang mit der Fig. 9 beschriebenen Verfahren zur Herstellung einer Lithiumanode.

Es umfasst die Schritte:
A - Bereitstellen einer Stromableiterschicht, die gitterartig mit einer offenen Hohlräume definierenden Leiterstruktur ausgebildet ist,
B - das Anordnen von lithiumbasiertem Material in den Hohlräumen zwischen der Leiterstruktur und
C - das Beschichten der Stromableiterschicht mit einem Kathodenaktivmaterial.

Das Bereitstellen der Stromableiterschicht umfasst ebenfalls wie in Verbindung mit dem ersten Ausführungsbeispiel einer Lithiumanode beschriebenen Verfahren die Herstellung und das Vorbereiten der Leiterstruktur durch die dort genannten Fügeverfahren bzw. mechanische Bearbeitungsverfahren.

Das Anordnen des lithiumbasierten Materials in den Hohlraum kann ebenfalls durch ein Tauch-, Walz- oder Streichverfahren erfolgen. Die beidseitige Beschichtung der Leiterstruktur 102 erlaubt es, die Kathodenanordnung mit zwei entsprechenden Lithiumanoden zu einer Lithiumzelle zu kombinieren.

### Lithiumionenzelle

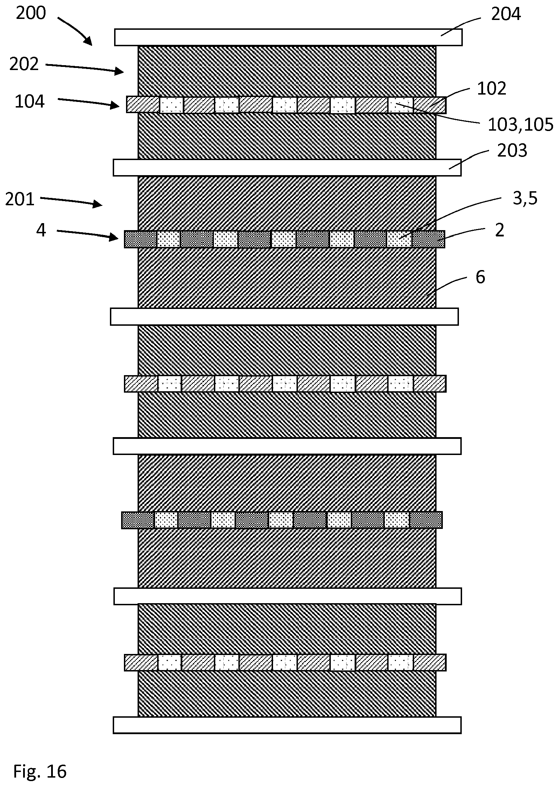

Fig. 16 zeigt eine mehrschichtige Lithiumionenzelle 200, die mehrschichtig aus ersten Elektroden 201, die als Lithiumanoden ausgebildet sind, und aus zweiten Elektroden 202 aufgebaut ist, die als Kathodenanordnungen ausgebildet sind. Die Elektroden sind jeweils durch einen Separator 203 voneinander getrennt und insgesamt zum Lithiumionentransport von einem Elektrolytwerkstoff fest oder flüssig durchsetzt (nicht dargestellt). Die erste Elektrode 201 umfasst eine Stromableiterschicht 4 und die zweite Elektrode eine Stromableiterschicht 104.

Die Stromableiterschicht 4 der ersten Elektrode 201 umfasst eine Leiterstruktur 2, die oben im Detail beschrieben ist, und deren Maschen 3 mit einem Siliziumwerkstoff als Anodenaktivmaterial 5 gefüllt sind. Die Stromableiterschicht 4 ist beidseitig mit einer Beschichtung 6 versehen, die aus einem oben beschriebenen Lithiumionen-leitenden Werkstoff, insbesondere einem Kohlenstoff ausgebildet sind.

Die Hohlräume 103 der Stromableiterschicht 104 bzw. der Leiterstruktur 102 der zweiten Elektrode 202 sind mit einem lithiumbasierten Material 105 ausgefüllt, dessen Zusammensetzung in Verbindung mit der oben beschriebenen Kathodenanordnung 100 angegeben ist.

Die in Fig. 16 dargestellte Lithiumionenzelle 200 umfasst zwei erste Elektroden (Lithiumanoden) 201 und drei zweite Elektroden (Kathodenanordnung) 202, die jeweils abwechselnd angeordnet sind. Die äußeren Flächen sind mit Abdeckungen 204 verschlossen. Die Funktion einer solchen Lithiumionenzelle ist an sich bekannt.

Es ergeben sich jedoch folgende erfindungsspezifische Besonderheiten. In den ersten Ladezyklen dient das lithiumbasierte Material 105 in den Maschen 103 dazu, zusätzliches Lithium bereitzustellen, das bei der Bildung einer SEI an den Anodenaktivmaterialpartikeln 5 und der Beschichtung 6 eingelagert wird und für die eigentliche Zellzyklisierung nicht mehr zur Verfügung stellt. Damit lässt sich ein Kapazitätsverlust begrenzen oder verhindern. Gleichzeitig erfolgt dieser Lithiumersatz volumenneutral aus den Maschen 103, deren Geometrie sich bei diesem Prozess nicht verändert. Das bedeutet, die Geometrie und insbesondere die Dicke einer solchen Lithiumionenzelle 100 verändert sich bei diesem Vorgang nicht.

Das gleiche gilt für den Interkalationsvorgang von Lithiumionen in das Anodenaktivmaterial 5, welches in den Maschen 3 der ersten Elektroden (Lithiumanode) 201 stattfindet. Wie oben im Detail beschrieben ist dort freies Volumen vorhanden, welches den beim Interkalieren stattfindenden Volumenzuwachs ausgleicht. Auch dieser Vorgang geschieht insgesamt volumenneutral, so dass eine geometrisch stabile und insbesondere volumenstabile Lithiumionenzelle 200 zur Verfügung gestellt werden kann.

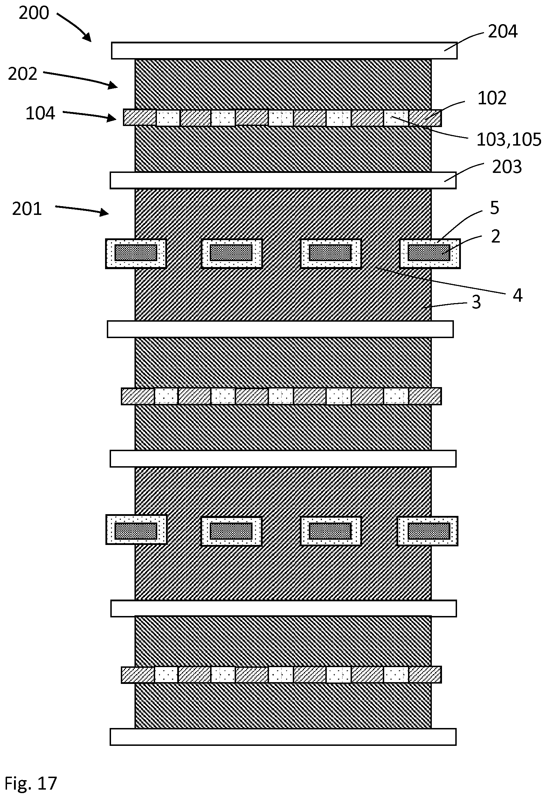

Fig. 17 zeigt einen alternativen Aufbau, bei dem die erste Elektrode 201 eine Lithiumanode gemäß dem zweiten Ausführungsbeispiel, das oben beschrieben ist, aufweist. Hier ist das Anodenaktivmaterial 5 nicht in den Maschen 3, also den offenen Hohlräumen der Leiterstruktur 2 angeordnet, sondern als die Leiterstruktur umhüllende Schicht 5, in die beim Interkalieren ebenfalls die Lithiumionen weitgehend volumenneutral eingelagert werden.

Die Maschen 3 sind dabei mit dem gleichen Material gefüllt, aus dem die Beschichtungen 6 ausgebildet sind, nämlich aus einem, insbesondere kohlenstoffhaltigen, Material zum Lithiumionentransport.

In anderen Ausführungen können auch die in den Figuren 17 und 16 dargestellten Ausführungen miteinander kombiniert werden. Demnach ist es möglich, eine mit Anodenaktivmaterial 5 umhüllte Leiterstruktur 2 vorgesehen und eine Leiterstruktur, bei der die Hohlräume (Maschen 3) mit dem Elektrodenaktivmaterial 5 gefüllt sind.

Insbesondere können auch Lithiumanoden mit folgenden Eigenschaften vorgesehen sein:
Lithiumanode (1) für eine Lithiumzelle (200) und/oder Lithiumbatterie (200), umfassend:
   - eine Stromableiterschicht (4),
   - ein Anodenaktivmaterial (5) und
   - eine Beschichtung (6) wobei die Stromableiterschicht (4) gitterartig mit einer offene Hohlräume (3) definierenden Leiterstruktur (2) ausgebildet ist, das Anodenaktivmaterial (5) als Schicht auf der Oberfläche der Leiterstruktur (2) angeordnet ist und die Beschichtung (6) die Stromableiterschicht (4) und damit das Anodenaktivmaterial (5) abdeckt und eine Füllung die Hohlräume (3) ausfüllend vorgesehen ist, die mit dem Anodenaktivmaterial (5) und der Beschichtung (6) gekoppelt ist.
Lithiumanode (1) nach einem der Ansprüche 1 bis 5, wobei die Füllung derart in der Leiterstruktur angeordnet ist, dass freies Volumen (7) zwischen dem Anodenaktivmaterial (5) und der Füllung ausgebildet ist und/oder die Beschichtung (6) derart auf der Stromableiterschicht (4) und der Füllung ausgebildet, dass freies Volumen (7) zwischen dem Anodenaktivmaterial (5) und der Beschichtung (6) ausgebildet ist.

Es können auch die folgenden Verfahrensschritte zu deren Herstellung ausgeführt werden:
Verfahren zur Herstellung einer Lithiumanode (1) nach einem der Ansprüche, aufweisend:
   - Bereitstellen einer Stromableiterschicht (4), die gitterartig mit einer offene Hohlräume (3) definierenden Leiterstruktur (2) ausgebildet ist,
   - Anordnen von Anodenaktivmaterial (5) auf der Leiterstruktur (2);
   - Beschichten der Stromableiterschicht (4) mit einem lithiumleitenden Werkstoff.
Verfahren bei dem das Anordnen des Anodenaktivmaterials (5) auf der Leiterstruktur (2) ein physikalisches oder ein chemisches oder ein elektrochemisches Verfahren umfasst, insbesondere einen thermischen Aufdampfprozess in einer evakuierten Bedampfungsanlage (PVD), eine chemische Gasphasenabscheidung aus entsprechenden Vorläuferverbindungen (CVD) oder das elektrochemische Abscheiden (Plating, Schmelzflusselektrolyse) des Materials in einem als galvanische Zelle ausgeführten Tauchbad mit silizumhaltigem Elektrolyten.

Grundsätzlich können auch folgende Verfahren angewendet werden:
- Thermisches Verdampfen (auch Bedampfen genannt)
- Elektronenstrahlverdampfen (engl. electron beam evaporation)
- Laserstrahlverdampfen (engl. pulsed laser deposition, pulsed laser ablation): Atome und Ionen werden durch einen kurzen intensiven Laserpuls verdampft.
- Lichtbogenverdampfen (engl. arc evaporation, Arc-PVD): Atome und Ionen werden durch einen starken Strom, der bei einer elektrischen Entladung zwischen zwei Elektroden fließt (wie bei einem Blitz), aus dem Ausgangsmaterial herausgelöst und in die Gasphase überführt.
- Molekularstrahlepitaxie (engl. molecular beam epitaxy)
- Sputtern (Sputterdeposition, Kathodenzerstäubung): Das Ausgangsmaterial wird durch lonenbeschuß zerstäubt und in die Gasphase überführt.
- lonenstrahlgestützte Deposition (engl. ion beam assisted deposition, IBAD)
- lonenplattieren
- ICB-Technik (ionized cluster beam deposition)

Es können Lithium-Ionen-Zelle mit folgenden Eigenschaften vorgesehen werden:
Lithium-Ionen-Zelle (200) für eine Lithiumbatterie mit:
   einer ersten Elektrode (201), die als Lithiumanode (1) ausgebildet ist und
   einer zweiten Elektrode (202), die als Kathodenanordnung (100) ausgebildet ist,
   wenigstens eine der ersten und zweiten Elektrode (201, 202) aufweist:
      eine Stromableiterschicht (4, 104),
      ein Funktionsmaterial (5, 105) und
      eine Beschichtung (6, 106), wobei
      die Stromableiterschicht (4, 104) gitterartig mit einer offene Hohlräume (3, 103) definierenden Leiterstruktur (2, 102) ausgebildet ist, das Funktionsmaterial (5, 105) in den Hohlräumen (3, 103) zwischen der Leiterstruktur (2, 102) angeordnet ist und die Beschichtung (6, 106) die Stromableiterschicht (4, 104) und das Funktionsmaterial (5, 105) abdeckt.
Lithium-Ionen-Zelle (200) bei der das Funktionsmaterial (5, 105) derart in den Hohlräumen (3, 103) der Leiterstruktur (2, 102) der ersten und/oder zweiten Elektrode angeordnet ist, dass freies Volumen (7, 107) zwischen dem Funktionsmaterial (5, 105) und der Leiterstruktur (2, 102) und/oder freies Volumen (7, 107) zwischen dem Funktionsmaterial (5, 105) und der Beschichtung (6, 106) ausgebildet ist.
Lithium-Ionen-Zelle (200), bei welcher das Funktionsmaterial (5) an einer ersten Elektrode (201) als Schicht auf der Oberfläche der Leiterstruktur (2) angeordnet ist und die Beschichtung (6), die Stromableiterschicht (4) und damit das Funktionsmaterial (5) abdeckt und eine Füllung die Hohlräume (3) ausfüllend vorgesehen ist, die mit dem Funktionsmaterial (5) und der Beschichtung (6) gekoppelt ist.
   die Stromableiterschicht (4, 104) gitterartig mit einer offene Hohlräume (3, 103) definierenden Leiterstruktur (2, 102) ausgebildet ist, das Funktionsmaterial (5, 105) in den Hohlräumen (3, 103) zwischen der Leiterstruktur (2, 102) angeordnet ist und die Beschichtung (6, 106) die Stromableiterschicht (4, 104) und das Funktionsmaterial (5, 105) abdeckt.

### Bezugszeichenliste

- 1: Lithiumanode
- 2: Leiterstruktur
- 2': Leitungsabschnitt
- 2a: Streckmetall
- 2b: Metallfolie
- 2c: Gewebestruktur
- 2d: Drähte
- 2d: Fliesstruktur (gemeint ist das Textilflies)
- 2e: Wirkstruktur
- 3: Maschen (offene Hohlräume)
- 4: Stromableiterschicht
- 5: Anodenaktivmaterial (Siliziumwerkstoff)
- 6: Beschichtung
- 7: freies Volumen
- 8: Füllung

- 20: Kammer
- 21: Objektträger
- 22: Heizung
- 23: Vakuumpumpe
- 24: Silizium-Partikel (verdampft)

- 100: Kathodenanordnung
- 102: Leiterstruktur
- 103: Masche (offener Hohlraum)
- 104: Stromableiterschicht
- 105: Lithium-basiertes Material
- 106: Beschichtung
- 107: freies Volumen

- 200: Lithium-Ionen-Zelle
- 201: erste Elektrode
- 202: zweite Elektrode
- 203: Separator
- 204: Abdeckung

## Patentansprüche

1. Lithiumanode (1) für eine Lithiumzelle (200) und/oder Lithiumbatterie (200), umfassend:
- eine Stromableiterschicht (4),
- ein Anodenaktivmaterial (5) und
- eine Beschichtung (6), wobei
die Stromableiterschicht (4) gitterartig mit einer offene Hohlräume (3) definierenden Leiterstruktur (2) ausgebildet ist, das Anodenaktivmaterial (5) in den Hohlräumen (3) zwischen der Leiterstruktur (2) angeordnet ist und die Beschichtung (6) die Stromableiterschicht (4) und das Anodenaktivmaterial (5) abdeckt.

2. Lithiumanode (1) nach Anspruch 1, wobei die Leiterstruktur (2) eine der folgenden Strukturen umfasst: Streckmetall (2a); perforiertes, gelochtes und/oder geschlitztes Metallblech (2b); perforierte, gelochte und/oder geschlitzte Metallfolie (2b); verschweißte Drahtanordnung (2c); verwebte Drahtanordnung (2c); gewirkte Drahtanordnung (2e); Drahtgelege (2d).

3. Lithiumanode (1) nach Anspruch 1 oder 2, wobei die Leiterstruktur (2) einen Metallwerkstoff, insbesondere Kupfer, umfasst.

4. Lithiumanode (1) nach einem der Ansprüche 1 bis 3, wobei das Anodenaktivmaterial (5) in den Hohlräumen (3) der Stromableiterschicht (4) durchlässig für Lithiumionen ausgebildet ist.

5. Lithiumanode (1) nach einem der Ansprüche 1 bis 4, wobei das Anodenaktivmaterial (5) einen Halbmetall-Werkstoff, insbesondere Si, umfasst.

6. Lithiumanode (1) nach einem der Ansprüche 1 bis 5, wobei das Anodenaktivmaterial (5) derart in den Hohlräumen (3) der Leiterstruktur (2) angeordnet ist, dass freies Volumen (7) zwischen dem Anodenaktivmaterial (5) und der Leiterstruktur (2) und/oder freies Volumen (7) zwischen dem Anodenaktivmaterial (5) und der Beschichtung (6) ausgebildet ist.

7. Lithiumanode (1) nach einem der Ansprüche 1 bis 6, wobei die Beschichtung (6) auf beiden Seiten der Stromableiterschicht (4) angeordnet ist.

8. Lithiumanode (1) nach einem der Ansprüche 1 bis 7, wobei die Beschichtung (6) aus einem lithiumionenleitenden Werkstoff (6) ausgebildet ist.

9. Lithiumanode (1) nach Anspruch 8, wobei der lithiumionenleitende Werkstoff (6) einen Kohlenstoffwerkstoff und/oder) Lithiumtitanat, LTO (Li4Ti5O12) umfasst.

10. Lithiumanode (1) nach Anspruch 9, wobei der Kohlenstoffwerkstoff einen der folgenden Werkstoffe umfasst: Graphit, harter Kohlenstoff, weicher Kohlenstoff, Kohlenstoffröhrchen.

11. Lithiumbatterie (200) mit einer Lithiumanode (1) nach einem der Ansprüche 1 bis 10, einer Kathode (100), einem Elektrolytwerkstoff und einem Separator (203), der die Lithiumanode (1) und die Kathode (100) voneinander trennt.

12. Verfahren zur Herstellung einer Lithiumanode (1) nach einem der Ansprüche 1 bis 10, aufweisend:
- Bereitstellen einer Stromableiterschicht (4), die gitterartig mit einer offene Hohlräume (3) definierenden Leiterstruktur (2) ausgebildet ist,
- Anordnen von Anodenaktivmaterial (5) in den Hohlräumen (3) zwischen der Leiterstruktur (2);
- Beschichten der Stromableiterschicht (4) mit einem lithiumleitenden Werkstoff (6)

13. Verfahren nach Anspruch 12, wobei das Bereitstellen der Stromableiterschicht (4) das Bereitstellen, Herstellen und Vorbereiten der Leiterstruktur (2) durch ein Fügeverfahren und/oder ein mechanisches Bearbeitungsverfahren umfasst.

14. Verfahren nach Anspruch 13, wobei das Anordnen des Anodenaktivmaterials (5) in die Hohlräume (3) zwischen der Leiterstruktur (2) einen Tauchprozess umfasst.

15. Verfahren nach Anspruch 14, wobei das Anordnen des Anodenaktivmaterials (5) in die Hohlräume (3) zwischen der Leiterstruktur (2) einen Walzprozess umfasst.

## Claims

1. Lithium anode (1) for a lithium cell (200) and/or lithium battery (200), comprising:
- a power outlet layer (4),
- an anode active material (5) and
- a coating (6), wherein
the power outlet layer (4) is configured in a grid-like manner with a conductor structure (2) defining open hollow spaces (3), the anode active material (5) is arranged in the hollow spaces (3) between the conductor structure (2) and the coating (6) covers the power outlet layer (4) and the anode active material (5).

2. Lithium anode (1) according to Claim 1, wherein the conductor structure (2) comprises one of the following structures: expanded metal (2a); perforated, punctured and/or slotted metal sheet (2b); perforated, punctured and/or slotted metal foil (2b); welded wire arrangement (2c); woven wire arrangement (2c); knitted wire arrangement (2e); wire lay-up (2d).

3. Lithium anode (1) according to Claim 1 or 2, wherein the conductor structure (2) comprises a metal material, in particular copper.

4. Lithium anode (1) according to any of Claims 1 to 3, wherein the anode active material (5) in the hollow spaces (3) of the power outlet layer (4) is permeable to lithium ions.

5. Lithium anode (1) according to any of Claims 1 to 4, wherein the anode active material (5) comprises a semimetal material, in particular Si.

6. Lithium anode (1) according to any of Claims 1 to 5, wherein the anode active material (5) is arranged in the hollow spaces (3) of the conductor structure (2) in such a way that free volume (7) is present between the anode active material (5) and the conductor structure (2) and/or free volume (7) is present between the anode active material (5) and the coating (6).

7. Lithium anode (1) according to any of Claims 1 to 6, wherein the coating (6) is arranged on both sides of the power outlet layer (4).

8. Lithium anode (1) according to any of Claims 1 to 7, wherein the coating (6) is made of a lithium ion-conducting material (6).

9. Lithium anode (1) according to Claim 8, wherein the lithium ion-conducting material (6) comprises a carbon material and/or lithium titanate, LTO (Li₄Ti₅O₁₂) .

10. Lithium anode (1) according to Claim 9, wherein the carbon material comprises one of the following materials: graphite, hard carbon, soft carbon, carbon tubes.

11. Lithium battery (200) comprising a lithium anode (1) according to any of Claims 1 to 10, a cathode (100), an electrolyte material and a separator (203) which separates the lithium anode (1) and the cathode (100) from one another.

12. Process for producing a lithium anode (1) according to any of Claims 1 to 10, comprising:
- provision of a power outlet layer (4) which is configured in a grid-like manner with a conductor structure (2) defining hollow spaces (3),
- arrangement of anode active material (5) in the hollow spaces (3) between the conductor structure (2) ;
- coating of the power outlet layer (4) with a lithium-conducting material (6).

13. Process according to Claim 12, wherein the provision of the power outlet layer (4) comprises provision, production and preparation of the conductor structure (2) by a joining process and/or a mechanical treatment process.

14. Process according to Claim 13, wherein arrangement of the anode active material (5) in the hollow spaces (3) between the conductor structure (2) comprises a dipping process.

15. Process according to Claim 14, wherein arrangement of the anode active material (5) in the hollow spaces (3) between the conductor structure (2) comprises a rolling process.

## Revendications

1. Anode au lithium (1) destinée à une pile au lithium (200) et/ou une batterie au lithium (200), ladite anode comprenant :
- une couche de déflexion de courant (4),
- un matériau anodique actif (5) et
- un revêtement (6),
la couche de déflexion de courant (4) étant réalisée sous la forme d'une grille qui comporte une structure conductrice (2) qui définit des cavités ouvertes (3), le matériau anodique actif (5) étant disposé dans les cavités (3) entre la structure conductrice (2) et le revêtement (6) recouvrant la couche de déflexion de courant (4) et le matériau anodique actif (5).

2. Anode au lithium (1) selon la revendication 1, la structure conductrice (2) comprenant l'une des structures suivantes : un métal étiré (2a) ; une tôle perforée, trouée et/ou fendue (2b); une feuille métallique perforée, trouée et/ou fendue (2b) ; un ensemble de fils soudés (2c) ; un ensemble de fils tissés (2c) ; un ensemble de fils tricotés (2e) ; une nappe de fils (2d).

3. Anode au lithium (1) selon la revendication 1 ou 2, la structure conductrice (2) comprenant une matière métallique, notamment du cuivre.

4. Anode au lithium (1) selon l'une des revendications 1 à 3, le matériau anodique actif (5) se trouvant dans les cavités (3) de la couche de déflexion de courant (4) étant conçu pour être perméable aux ions lithium.

5. Anode au lithium (1) selon l'une des revendications 1 à 4, le matériau anodique actif (5) comprenant une matière semi-métallique, notamment du Si.

6. Anode au lithium (1) selon l'une des revendications 1 à 5, le matériau anodique actif (5) étant disposé dans les cavités (3) de la structure conductrice (2) de façon à former un volume libre (7) entre le matériau anodique actif (5) et la structure conductrice (2) et/ou à former un volume libre (7) entre le matériau anodique actif (5) et le revêtement (6) .

7. Anode au lithium (1) selon l'une des revendications 1 à 6, le revêtement (6) étant disposé de part et d'autre de la couche de déflexion de courant (4) .

8. Anode au lithium (1) selon l'une des revendications 1 à 7, le revêtement (6) étant formé à partir d'une matière conductrice (6) d'ions lithium.

9. Anode au lithium (1) selon la revendication 8, la matière conductrice (6) d'ions lithium comprenant une matière carbonée et/ou du titanate de lithium, LTO (Li4Ti5O12) .

10. Anode au lithium (1) selon la revendication 9, la matière carbonée comprenant l'une des matières suivantes : du graphite, du carbone dur, du carbone mou, des tubes en carbone.

11. Batterie au lithium (200) comprenant une anode au lithium (1) selon l'une des revendications 1 à 10, une cathode (100), une matière électrolytique et un séparateur (203) qui sépare l'anode au lithium (1) et la cathode (100) l'une de l'autre.

12. Procédé de fabrication d'une anode au lithium (1) selon l'une des revendications 1 à 10, ledit procédé comportant les étapes suivantes :
- fournir une couche de déflexion de courant (4) qui est conçue sous la forme d'une grille qui comprend une structure conductrice (2) qui définit des cavités ouvertes (3),
- disposer le matériau anodique actif (5) dans les cavités (3) entre la structure conductrice (2) ;
- revêtir la couche de déflexion de courant (4) avec une matière conductrice de lithium (6).

13. Procédé selon la revendication 12, l'étape de fourniture de la couche de déflexion de courant (4) comprenant les étapes de fourniture, fabrication et préparation de la structure conductrice (2) par un procédé d'assemblage et/ou un procédé de traitement mécanique.

14. Procédé selon la revendication 13, l'étape de disposition du matériau anodique actif (5) dans les cavités (3) entre la structure conductrice (2) comprenant un procédé de trempage.

15. Procédé selon la revendication 14, l'étape de disposition du matériau anodique actif (5) dans les cavités (3) entre la structure conductrice (2) comprenant un procédé de laminage.
